# FASCICULE DE BREVET EUROPEEN

(11) **EP 0 816 163 B1**
(45) Date de publication et mention de la délivrance du brevet: **23.04.2003**
(21) Numéro de dépôt: 97401429.2
(22) Date de dépôt: 20.06.1997
(51) Int. Cl.: B60N 2/44, B60N 2/28

(54) **Siège pour enfant à accoudoirs mobiles**
Kindersitz mit bewegbaren Armlehnen
Infant seat with movable armrests

(30) Priorité: 28.06.1996 FR 9608133
(43) Date de publication de la demande: 07.01.1998
(73) Titulaire: AMPAFRANCE S.A., 49309 Cholet (FR)
(72) Inventeur: Surot, Patrick, 49300 Cholet (FR)
(74) Mandataire: Casalonga, Axel

(56) Documents cités:
- FR-A- 2 647 727
- US-A- 4 679 855
- US-A- 5 092 654
- US-A- 5 328 236
- PATENT ABSTRACTS OF JAPAN vol. 010, no. 118 (M-475), 2 mai 1986 & JP 60 248446 A (SHIRAKI KINZOKU KOGYO KK), 9 décembre 1985,

## Description

La présente invention a pour objet un siège pour enfant comprenant un baquet muni d'une partie d'assise, d'une partie de dossier et de parties latérales et destiné à être posé et fixé sur un siège de véhicule automobile.

On sait que les sièges pour enfant destinés à l'automobile sont conçus pour garantir un maximum de protection en cas d'accident et ce, dans les meilleures conditions de confort possibles.

On a déjà décrit dans la demande de brevet français n° 2 647 727 (AMPAFRANCE) un siège pour enfant comprenant des éléments de châssis latéraux articulés par rapport aux éléments de châssis principaux définissant le siège et le dossier de façon à pouvoir modifier la largeur du baquet.

La présente invention a pour objet, à partir de l'enseignement dudit document français, de faciliter la commande du mouvement simultané des éléments de châssis latéraux afin de permettre une modification simple de la largeur du baquet.

Selon l'invention telle pue définie dans la revendication indépendante, le siège pour enfant comprend un baquet muni d'une partie d'assise et d'une partie de dossier et destiné à être posé et fixé sur un siège de véhicule automobile. Deux éléments de châssis latéraux sont montés respectivement d'un côté et de l'autre du baquet, sur des axes supérieur et inférieur solidaires du baquet et situés dans un plan vertical. Les deux éléments de châssis latéraux définissent deux armatures d'accoudoir pivotant entre une position mutuellement rapprochée et une position écartée. Le pivotement des deux éléments de châssis latéraux est commandé simultanément au moyen d'un organe de commande unique monté sur l'avant de la partie d'assise et agissant simultanément sur les deux éléments de châssis latéraux. Cet organe de commande comprend avantageusement une vis montée en vue de sa rotation dans un palier solidaire d'une portion inclinée de l'avant de la partie d'assise. La vis agit par exemple sur un plateau rotatif relié à deux tringles de commande elles-mêmes reliées aux deux éléments de châssis latéraux.

L'invention sera mieux comprise à l'étude d'un mode de réalisation particulier décrit à titre d'exemple nullement limitatif et illustré par les figures annexées sur lesquelles :

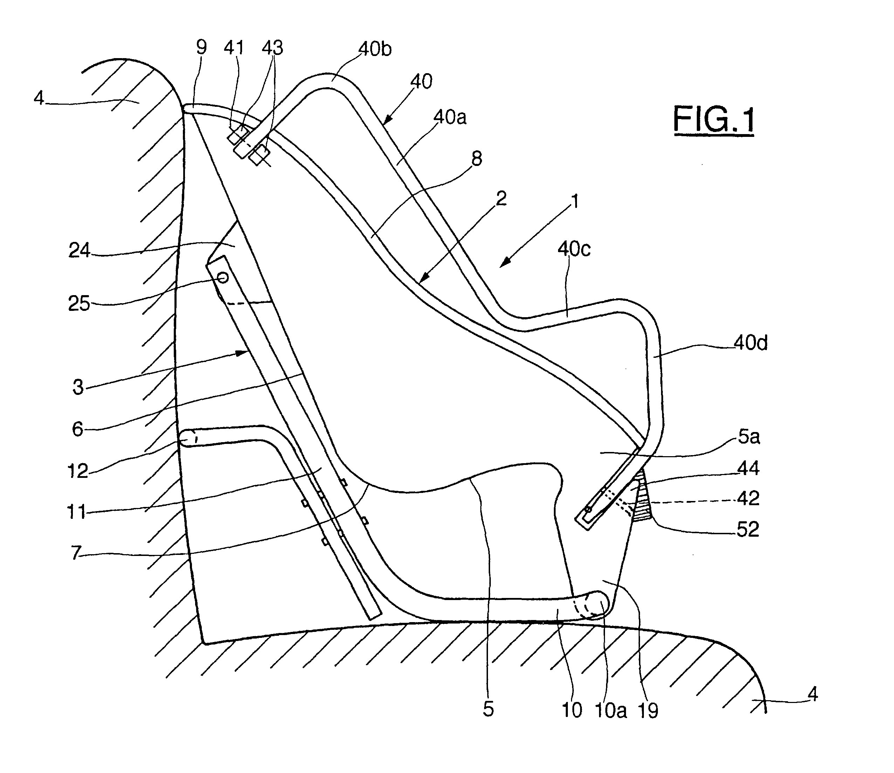

La figure 1 est une vue en élévation de côté de l'ossature d'un siège pour enfant conforme à la présente invention;
la figure 2 est une vue de devant de l'ossature de siège de la figure 1 montrant les accoudoirs latéraux dans la position la plus rapprochée;
la figure 3 est une vue similaire à la figure 2 montrant les accoudoirs latéraux dans leur position la plus écartée;
la figure 4 est une vue de dessous partielle montrant le mécanisme de commande des accoudoirs latéraux; et
la figure 5 est une vue de détail en coupe du mécanisme de commande des accoudoirs.

Tel qu'il est illustré sur les figures, le siège pour enfant référencé 1 dans son ensemble, comprend une partie moulée en matière plastique formant un baquet 2, et une embase, réalisée ici sous la forme d'une armature métallique tubulaire 3 soutenant le baquet 2 et constituant un support destiné à être posé et fixé sur le siège 4 du véhicule, illustré schématiquement. L'assujettissement du siège pour enfant 1 au siège du véhicule 4, se fait de manière classique et non illustrée sur les dessins, au moyen de sangles ou de préférence directement par le biais de la ceinture de sécurité du véhicule automobile qui coopère avec l'armature 3 en vue de cette fixation.

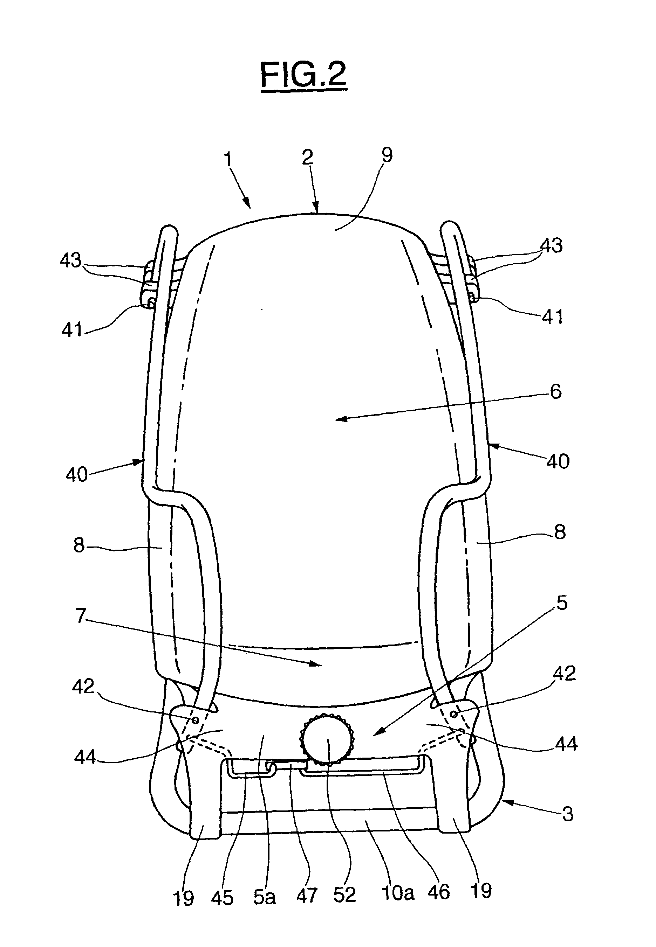

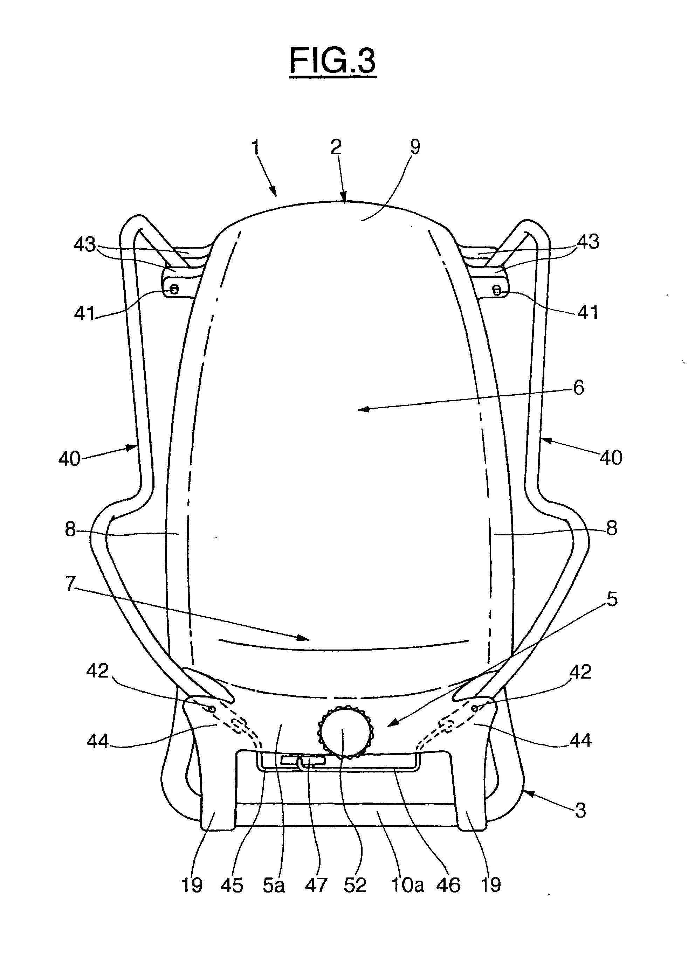

Le baquet 2 comprend une partie d'assise 5 (figures 2 et 3) sensiblement horizontale et une partie de dossier 6 sensiblement verticale avec cependant une légère inclinaison vers l'arrière pour améliorer le confort de l'enfant. La partie d'assise 5 et la partie de dossier 6 se rejoignent entre elles par une portion inférieure incurvée 7. Le baquet 2 est complété par des portions latérales 8 qui s'étendent depuis la partie supérieure 9 du baquet 2 qui joue le rôle d'un appui-tête, jusqu'à sa partie inférieure où elle rejoint la partie avant 5a de l'assise qui joue le rôle d'un soutien pour les jambes ou les pieds de l'enfant. L'ensemble ainsi constitué présente, comme on peut le voir sur les figures, une forme générale de baquet assurant ainsi le confort de l'enfant. Bien entendu le baquet en matière plastique moulé est habillé d'un rembourrage approprié qui n'est pas illustré sur les figures.

L'armature tubulaire 3 comprend un cadre inférieur 10 disposé sous la portion d'assise 5 et destiné à être posé sur le siège 4 du véhicule automobile. Le cadre inférieur 10 se prolonge vers le haut sous la forme d'un cadre arrière 11 qui reçoit en outre une barre d'écartement transversale 12 conçue sous la forme d'un U et solidaire du cadre arrière 11. L'ensemble de l'armature tubulaire 3 ainsi constitué peut être posé sur le siège du véhicule, la barre d'écartement 12 venant prendre appui sur le dossier du siège 4. Le siège pour enfant 1 se trouve alors convenablement installé sur le siège 4 du véhicule, le baquet 2 étant supporté par l'armature rigide 3.

Le baquet 2 en matière plastique moulée est rendu solidaire de l'armature 3 à la fois dans sa partie basse et dans sa partie haute. A cet effet, la partie avant 5a présente deux excroissances 19 dirigées vers le bas et enserrant le montant transversal 10a du cadre inférieur 10. De la même manière, la partie de dossier 6 du baquet 2 présente dans sa portion supérieure et de chaque côté, une patte en saillie vers l'arrière, référencée 24, venue de moulage avec le baquet 2 et enserrant un montant transversal 25 de l'armature 3.

Conformément à la présente invention, le siège pour enfant 1 présente des accoudoirs à écartement variable permettant de modifier à volonté la largeur utile du baquet 2.

A cet effet comme illustré sur les figures, le siège pour enfant 1 comporte de chaque côté du baquet 2 un élément de châssis latéral 40. Chaque élément 40 est constitué, dans l'exemple illustré, par un tube métallique, dont l'extrémité supérieure est montée à rotation sur un axe supérieur 41 et dont l'extrémité inférieure est montée à rotation sur un axe inférieur 42. Les axes inférieurs 42 et supérieurs 41 sont fixés sur le baquet 2 en matière plastique moulée et sont en outre disposés dans un plan vertical comme on le voit par exemple sur les figures 2 et 3. On notera que, dans l'exemple illustré, les axes supérieurs 41 sont montés sur des pattes de fixation 43 venues de moulage avec le baquet 2. Il en est de même des axes inférieurs 42 montés sur des pattes de fixation 44 venues de moulage avec le baquet 2 au voisinage de la partie avant 5a de l'assise 5 et en prolongation des excroissances 19.

Dans l'exemple illustré, chaque élément de châssis latéral 40 présente une portion supérieure 40a munie d'un coude 40b qui permet d'assurer une bonne protection de la tête de l'enfant. Chaque élément de châssis latéral 40 comporte en outre une portion inférieure 40c proche de l'horizontale qui se poursuit par un coude sensiblement vertical 40d, l'ensemble jouant le rôle d'un accoudoir. Toute autre forme appropriée pourrait être adoptée.

On comprendra bien entendu que dans la réalité un rembourrage approprié vient habiller chacun des éléments de châssis latéraux 40 formant ainsi de chaque côté du baquet 2 des montants latéraux améliorant la protection et le confort de l'enfant.

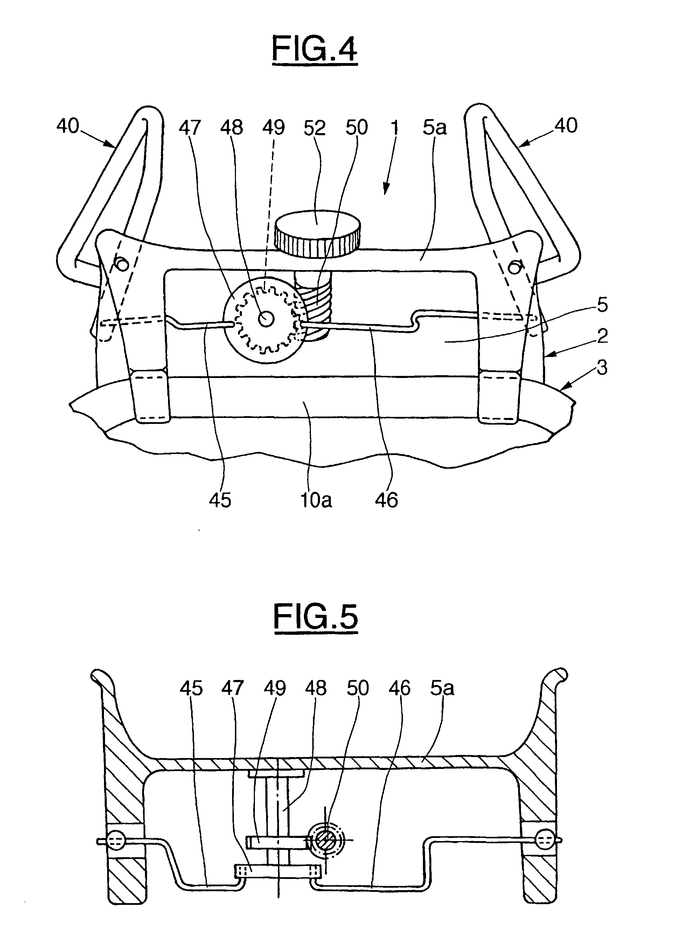

Selon l'invention, les deux éléments de châssis latéraux 40 peuvent être plus ou moins écartés l'un de l'autre. Leur pivotement se fait simultanément au moyen de deux tringles de commande 45 et 46 reliées à l'une de leurs extrémités aux extrémités inférieures respectives des éléments de châssis latéraux 40 et à leur autre extrémité à un plateau rotatif 47. La fixation des tringles de commande 45 et 46 se fait sur le plateau rotatif 47 en des points sensiblement diamètralement opposés comme on peut le voir sur la figure 4.

Le plateau 47 est monté sur un axe 48 sensiblement vertical (figure 5) solidaire de l'avant Sa de la partie d'assise 5. La rotation du plateau 47 est provoquée par un pignon 49 également monté sur l'axe 48 et engrènant avec une vis 50 montée en vue de sa rotation dans un palier solidaire de la partie avant 5a de l'assise 5. La vis 50 traverse la partie avant 5a et comporte à son extrémité une molette d'entraînement 52 disposée à l'extérieur de la partie avant 5a de l'assise 5 de façon à permettre à l'utilisateur d'entraîner manuellement en rotation la vis 50 et par voie de conséquence le plateau rotatif 47, provoquant ainsi l'écartement ou le rapprochement des deux éléments de châssis latéraux. La vis 50 et la molette 52 sont, dans l'exemple illustré, disposées dans le plan vertical de symétrie du siège 1. On notera en observant la figure 5 que le plateau rotatif 47 et l'axe 48, du fait des moyens d'entraînement en rotation qui viennent d'être décrits et en particulier de la disposition axiale de la vis 50 et de la molette d'entraînement 52, sont désaxés par rapport au plan de symétrie vertical du siège 1 dans son ensemble. Il en résulte que la tringle de commande 45 est plus courte que la tringle de commande 46.

Grâce à la structure qui vient d'être décrite, le siège selon l'invention peut être aisément adapté à l'enfant, par exemple en fonction de sa corpulence ou de son âge. La disposition de la molette d'entraînement dans l'axe du siège et de la partie avant de l'assise facilite l'accès aux moyens de commande des accoudoirs.

## Revendications

1. Siège pour enfant du type comprenant un baquet (2) muni d'une partie d'assise (5) et d'une partie de dossier (6) et destiné à être posé et fixé sur un siège (4) de véhicule automobile, deux éléments de châssis latéraux (40) étant montés à rotation respectivement d'un côté et de l'autre du baquet (2), chaque élément présentant une extrémité supérieure montée à rotation sur un axe supérieur (41) et une extrémité inférieure montée à rotation sur un axe inférieur (42), les axes inférieur (41) et supérieur (42) étant solidaires du baquet (2) et situés dans un plan vertical, de façon à définir deux armatures d'accoudoir pivotant entre une position mutuellement rapprochée et une position écartée, le pivotement des deux éléments de châssis latéraux étant commandé simultanément au moyen d'un organe de commande unique (52), **caractérisé par le fait que** ledit organe de commande unipue (52) est monté sur l'avant (5a) de la partie d'assise (5) et agit simultanément sur les deux éléments de châssis latéraux.

2. Siège pour enfant selon la revendication 1 **caractérisé par le fait que** l' organe de commande agit sur un plateau rotatif (47) relié à deux tringles de commande (45, 46) elles mêmes reliées aux deux éléments de châssis latéraux (40).

3. Siège pour enfant selon la revendication 2 **caractérisé par le fait que** l'organe de commande (52) est rotatif et entraîne une vis (50) provoquant la rotation d'une roue dentée (49) solidaire du plateau rotatif (47).

4. Siège pour enfant selon la revendication 3, **caractérisé par le fait que** la vis (50) traverse l'avant (5a) de la partie d'assise (5).

5. Siège pour enfant selon l'une quelconque des revendications 2 et 4 **caractérisé par le fait que** les tringles de commande (45, 46) sont reliées aux extrémités inférieures des deux éléments de châssis latéraux (40).

6. Siège pour enfant selon l'une quelconque des revendications 3 à 5, **caractérisé par le fait que** la vis (50) et l'organe de commande (52) sont disposés dans le plan de symétrie vertical du siège.

7. Siège pour enfant selon la revendication 6, **caractérisé par le fait que** le plateau rotatif (47) est monté sur un axe (48) décalé par rapport au plan de symétrie vertical du siège, les tringles de commande (45, 46) étant de longueur différente.

8. Siège pour enfant selon l'une quelconque des revendications précédentes **caractérisé par le fait que** chaque élément de châssis latéral (40) présente une portion supérieure (40a, 40b) protégeant la tête de l'enfant et une portion inférieure (40c) proche de l'horizontale jouant le rôle d'un accoudoir.

## Patentansprüche

1. Kindersitz vom Typ aufweisend eine Schale (2), die mit einem Sitzteil (5) und mit einem Rückenlehnenteil (6) ausgestattet ist und dafür bestimmt ist, auf einem Sitz (4) eines Automobilfahrzeuges aufgesetzt und befestigt zu sein, wobei zwei seitlichen Chassiselemente (40) jeweils in Drehung auf der einen Seite und der anderen Seite der Schale (2) montiert sind, wobei jedes Element ein oberes Ende aufweist, das in Drehung montiert ist und ein unteres Ende, welches in Drehung montiert ist in einer Weise, um zwei Armlehnengestänge zu definieren, welche zwischen einer jeweils angenäherten und einer entfernten Position schwenkbar sind, wobei die Schwenkung der beiden seitlichen Chassiselemente simultan mittels einem einzigen Steuermittel (52) gesteuert wird, **dadurch gekennzeichnet, dass** das genannte obere Ende und untere Ende in Drehung auf jeweiligen oberen (41) und unteren (42) Achsen montiert sind, wobei die untere Achse (41) und die obere Achse (42) mit der Schale (2) fest verbunden sind und in einer vertikalen Ebene angeordnet sind und dass das einzige Steuermittel (52) auf dem Vorderteil (5a) des Sitzteils (5) montiert ist und simultan auf die zwei seitlichen Chassiselemente wirkt.

2. Kindersitz gemäß Anspruch 1, **dadurch gekennzeichnet, dass** das Steuermittel auf eine Drehscheibe (47) wirkt, welche mit zwei Steuerstangen (45, 46) verbunden ist, wobei sie selbst mit zwei seitlichen Chassiselementen (40) verbunden sind.

3. Kindersitz nach Anspruch 2, **dadurch gekennzeichnet, dass** das Steuennittel (52) drehend ist und eine Schraube (50) antreibt, welche die Drehung eines Zahnrades (49) hervorruft, das fest verbunden ist mit der Drehscheibe (47).

4. Kindersitz nach Anspruch 3, **dadurch gekennzeichnet, dass** die Schraube (50) das Vorderteil (50a) des Sitzteils (5) durchquert.

5. Kindersitz nach irgendeinem der Ansprüche 2 und 4, **dadurch gekennzeichnet, dass** die Steuerstangen (45, 46) an den unteren Enden der zwei seitlichen Chassiselemente (40) verbunden sind.

6. Kindersitz nach irgendeinem der Ansprüche 3 bis 5, **dadurch gekennzeichnet, dass** die Schraube (50) und das Steuermittel (52) in der veztikalen Symmetrieebene des Sitzes angeordnet sind.

7. Kindersitz nach Anspruch 6, **dadurch gekennzeichnet, dass** die Drehscheibe (47) auf einer Achse (58) montiert ist, die in Bezug auf die vertikale Symmetrieebene des Sitzes versetzt ist, wobei die Steuerstangen (45, 46) von unterschiedlicher Länge sind.

8. Kindersitz nach irgendeinem der zuvorigen Ansprüche, **dadurch gekennzeichnet, dass** jedes seitliche Chassiselement (40) einen oberen Abschnitt (40a, 40b) aufweist, welcher den Kopf des Kindes schützt und einen unteren Abschnitt (40c) nahe zu der Horizontalen, welcher die Rolle einer Armlehne spielt.

## Claims

1. Child seat of the type comprising a bucket (2) equipped with a sitting part (5) and with a back part (6) and intended to be placed on and fastened to a motor vehicle seat (4), two lateral frame elements (40) being mounted rotatably respectively on either side of the bucket (2), each element having an upper end rotatably mounted and a lower end rotatably mounted so as to define two armrest reinforcements pivoting between a position in which they are moved close to one another and a position in which they are moved away from one another, the pivoting of the two lateral frame elements being controlled simultaneously by means of a single control member (52), **characterized in that** the abovementioned upper and lower ends are mounted rotatably on respective upper (41) and lower (42) axles, the upper (41) and lower (42) axles being integral with the bucket (2) and arranged in a vertical plane, and **in that** the said single control member (52) is mounted on the front (5a) of the sitting part (5) and acts simultaneously on the two lateral frame elements.

2. Child seat according to Claim 1, **characterized in that** the control member acts on a rotary plate (47) connected to two control rods (45, 46), themselves connected to the two lateral frame elements (40).

3. Child seat according to Claim 2, **characterized in that** the control member (52) is rotary and drives a screw (50) causing the rotation of a gearwheel (49) integral with the rotary plate (47).

4. Child seat according to Claim 3, **characterized in that** the screw (50) passes through the front (5a) of the sitting part (5).

5. Child seat according to either one of Claims 2 and 4, **characterized in that** the control rods (45, 46) are connected to the lower ends of the two lateral frame elements (40).

6. Child seat according to any one of Claims 3 to 5, **characterized in that** the screw (50) and the control member (52) are arranged in the vertical plane of symmetry of the seat.

7. Child seat according to Claim 6, **characterized in that** the rotary plate (47) is mounted on an axle (48) offset relative to the vertical plane of symmetry of the seat, the control rods (45, 46) being of different length.

8. Child seat according to any one of the preceding claims, **characterized in that** each lateral frame element (40) has an upper portion (40a, 40b) protecting the child's head and a lower portion (40c) which is close to the horizontal and performs the function of an armrest.
